(19) Europäisches Patentamt
European Patent Office
Office européen des brevets

(11) **EP 1 533 610 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
**G01N 25/48** *(2006.01)*  **G01K 17/00** *(2006.01)*

(21) Anmeldenummer: **04027615.6**

(22) Anmeldetag: **20.11.2004**

(54) **Verfahren und Vorrichtung zur Messung der bei chemischen oder physikalischen Umsetzungen frei werdenden Wärme**

Method and device for measuring the heat developed by chemical or physical reactions.

Procédé et dispositif de mesure de la chaleur fournie par des réactions chimiques ou physiques

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **24.11.2003 DE 10355126**

(43) Veröffentlichungstag der Anmeldung:
**25.05.2005 Patentblatt 2005/21**

(73) Patentinhaber: **Fraunhofer-Gesellschaft zur Förderung der angewandten Forschung e.V.
80686 München (DE)**

(72) Erfinder:
- **Antes, Jürgen
  76229 Karlsruhe (DE)**
- **Loebbecke, Stefan
  76137 Karlsruhe (DE)**
- **Krause, Horst, Dr.
  76327 Pfinztal (DE)**
- **Schifferdecker, Daniel
  76327 Pfinztal (DE)**

(74) Vertreter: **Lenz, Steffen
  LICHTI - Patentanwälte
  Postfach 41 07 60
  76207 Karlsruhe (DE)**

(56) Entgegenhaltungen:
DE-A1- 19 703 892    DE-C1- 19 707 044
US-A- 3 726 644      US-A1- 2002 185 184

- **VELÁZQUEZ-CAMPOY A ET AL: "Development of an isothermal titration microcalorimetric system with digital control and dynamic power Peltier compensation. I. Description and basic performance" REVIEW OF SCIENTIFIC INSTRUMENTS, AMERICAN INSTITUTE OF PHYSICS, US, Bd. 71, Nr. 4, April 2000 (2000-04), Seiten 1824-1831, XP012038244 ISSN: 0034-6748**
- **ANTES J ET AL: "ANALYSIS AND IMPROVEMENT OF STRONG EXOTHERMIC NITRATIONS IN MICROREACTORS" CHEMICAL ENGINEERING RESEARCH AND DESIGN, PART A, INSTITUTION OF CHEMICAL ENGINEERS, XX, Bd. 81, Nr. PART A, August 2003 (2003-08), Seiten 760-765, XP008060785 ISSN: 0263-8762**
- **J. ANTES ET AL.: "Ein neues micro-Kalorimeter zur isothermen Bestimmung von thermodynamischen und kinetischen Kenngrössen stark exothermer Reaktionen" CHEMIE INGENIEUR TECHNIK, Bd. 76, Nr. 9, September 2004 (2004-09), Seiten 1332-1333, XP002432506**
- **J.J. CHRISTENSEN ET AL.: "Isothermal, isobaric, elevated temperature, high-pressure, flow calorimeter" REVIEW OF SCIENTIFIC INSTRUMENTS, Bd. 52, Nr. 8, August 1981 (1981-08), Seiten 1226-1231, XP002432507**

**Beschreibung**

Die Erfindung betrifft ein Verfahren zur Messung der bei chemischen und/oder physikalischen Umsetzungen frei werdenden Wärme, wobei die miteinander zur Umsetzung zu bringenden Komponenten einem Reaktor zugeführt werden und die dort frei werdende Wärme gemessen wird. Sie ist ferner auf eine Vorrichtung zur Messung der bei chemischen und/oder physikalischen Umsetzungen frei werdenden Wärme mit einem Reaktor mit einer Temperiereinrichtung, einem Steuerglied zur Steuerung der Temperiereinrichtung und einem Meßglied zur Messung der bei der Umsetzung frei werdenden Wärme und auf ein Computerprogrammprodukt zur Durchführung eines solchen Verfahrens auf einer derartigen Vorrichtung gerichtet.

Zur Messung der bei chemischen Reaktionen frei werdenden Reaktionswärme, aber auch der bei physikalischen Prozessen, wie Absorption, Adsorption, Lösung oder Fällung, Umwandlung von Kristallmodifikationen etc., freigesetzten Wärme werden in der Regel sogenannte Kalorimeter eingesetzt. Diese arbeiten diskontinuierlich bzw. chargenweise, wobei die miteinander chemisch oder physikalisch zur Umsetzung zu bringenden Komponenten dem Kalorimeter in jeweils vorgegebenen Mengen zugesetzt werden und die bei der Umsetzung frei werdende Wärme anhand der gemessenen Temperaturänderung errechnet wird. Um die Komponenten miteinander zur Reaktion zu bringen, wird das Kalorimeter mit einem vorgegebenen Temperaturprogramm beheizt bzw. gekühlt. Ein solches Verfahren und eine Vorrichtung zur Durchführung des Verfahrens ist beispielsweise aus der DE 197 03 892 A1 bekannt.

Nachteilig ist einerseits die verhältnismäßig lange Analysenzeit, die je nach Reaktionsmischung mehrere Stunden betragen kann, da zur Vermeidung von Meßfehlern sichergestellt werden muß, daß die tatsächliche Temperatur der in der Regel konvektiv beheizten Probe stets der gemessenen Temperatur entspricht und die Probe ferner gleichmäßig aufgeheizt werden muß, so daß die Probe hinreichend langsam aufgeheizt werden muß. Ferner ist der Temperaturverlauf bei stark exothermen und spontan ablaufenden chemischen Reaktionen, z.B. bei der Ermittlung von Reaktionswärmen von Treib-, Explosivstoffen oder Oxidatoren, in meßtechnischer Hinsicht nicht exakt zu verfolgen und kann ein solcher Temperatursprung insbesondere bei unbekannten Reaktionen sicherheitstechnisch bedenklich sein, da ein solcher Temperatursprung Folgereaktionen auslösen kann, die zu einer spontanen Zersetzung der Reaktionsmischung führen, was überdies eine Ermittlung der Reaktionswärme der Primärreaktion unmöglich macht. Hinzu kommt, daß bei herkömmlichen Kalorimetern das für eine reproduzierbare Messung erforderliche Reaktionsvolumen relativ groß, z.B. etwa 1 bis 2 1, sein muß, was bei teuren Ausgangsstoffen einen beträchtlichen Kostenfaktor darstellt. Schließlich ist bei der Berechnung der Reaktionswärme anhand der gemessenen Temperatur grundsätzlich von Nachteil, daß die Wärmekapazitäten der Umsetzungsprodukte oft ebensowenig bekannt sind wie die einzelnen Umsetzungsprodukte selbst sowie der Umsatz, so daß die anhand des gemessenen Temperaturverlaufs ermittelte Reaktionswärme ungenau ist und das Kalorimeter folglich verhältnismäßig aufwendig kalibriert werden muß.

Mit "frei werdender Wärme" ist in diesem Zusammenhang grundsätzlich sowohl die bei exothermen Vorgängen freigesetzte (betragsmäßig positive) Wärme als auch die bei endothermen Vorgängen aufgenommene (betragsmäßig negative) Wärme angesprochen.

Ein weiteres Verfahren ist bekannt von Velazquez-Campoy et al., Review of Scientific Instruments, Bd. 71, Nr. 4, April 2000, Seiten 1824 - 1831.

Der Erfindung liegt die Aufgabe zugrunde, ein Verfahren und eine Vorrichtung zur Messung der bei chemischen und/oder physikalischen Umsetzungen frei werdenden Wärme der eingangs genannten Art dahingehend weiterzubilden, daß eine direkte Messung der bei der Umsetzung frei werdenden Wärme bei im wesentlichen isothermer Prozeßführung möglich ist.

In verfahrenstechnischer Hinsicht wird diese Aufgabe erfindungsgemäß durch ein Verfahren gemäß Anspruch 1 gelöst.

Das erfindungsgemäße Verfahren ermöglicht eine isotherme Messung der bei der Umsetzung der dem Reaktor kontinuierlich zugeführten Komponenten frei werdenden Wärme in Abhängigkeit der an das Peltier-Element angelegten elektrischen Spannung. Dabei wird der Reaktor mittels des Peltier-Elementes so lange temperiert - im Falle einer exothermen Reaktion gekühlt bzw. im Falle einer endothermen Reaktion erhitzt -, bis die in dem mit dem Reaktor in Kontakt stehenden Seebeck-Element induzierte Spannung im wesentlichen gleich null beträgt, d.h. die Temperatur im Reaktor entspricht im wesentlichen der Temperatur des Seebeck-Elementes und der Wärmestrom zwischen dem Reaktor und dem Seebeck-Element ist im wesentlichen gleich null. Nach dieser "Anlaufphase" wird die bei der Umsetzung frei werdende Wärme in Abhängigkeit der an das Peltier-Element angelegten Spannung, welche zur Aufrechterhaltung einer in dem Seebeck-Element induzierten Spannung von im wesentlichen gleich null erforderlich ist, errechnet, wobei vorausgesetzt werden kann, daß die dem Reaktor zugeführte bzw. die aus dem Reaktor abgeführte Wärme im wesentlichen vollständig über das Peltier-Element zu- bzw. abgeführt wird und die Umsetzung im Reaktor ferner isotherm geschieht, solange die in dem Seebeck-Element induzierte Spannung im wesentlichen null ist. Folglich wird dem Reaktor mittels des Peltier-Elementes stets die gesamte, für eine isotherme Prozeßführung erforderliche Wärme zugeführt bzw. wird dem Reaktor die gesamte, für eine isotherme Prozeßführung erforderliche Wärme abgeführt, wobei diese für eine isotherme Prozeßführung erforderliche elektrische Spannung $U_{Peltier}$, welche an das Peltier-Element angelegt wird, proportional zu der bei der Umsetzung der Komponenten im Reaktor frei werdenden Wärmeleistung $P_{Meß}$ ist, welche über das Peltier-Element zu- bzw. abgeführt wird:

$$P_{Meß} = c \cdot U_{Peltier}$$

Dabei ist c eine Proportionalitätskonstante, welche von der Art des eingesetzten Peltier-Elementes und der Geometrie sowie dem Aufnahmevermögen des Reaktors abhängt. Da die Abhängigkeit der als elektrische Größe (z.B. Spannung oder Strom) gemessenen Wärmeleistung $P_{Meß}$. über einen verhältnismäßig großen Arbeitsbereich linear von dem eingestellten Volumenstrom der dem Reaktor kontinuierlich zugeführten Komponenten abhängt und zudem von der eingestellten Meßtemperatur weitestgehend unabhängig ist, genügt für eine Vielzahl von Messungen im jeweiligen Arbeitsbereich eine einzige Kalibrierung zur Ermittlung der Proportionalitätskonstanten c, so daß diese einfach und schnell und insbesondere unabhängig von den Wärmekapazitäten der häufig unbekannten Umsetzungsprodukte ermittelbar ist. Aus der gemessenen Wärmeleistung $P_{Meß}$ kann unter Berücksichtigung des Umsatzes bzw. des Wirkungsgrades W die absolute Wärmeleistung P der chemischen Reaktion bzw. der physikalischen Umsetzung, wie einer Absorption, Adsorption, Lösung oder Fällung, Umwandlung von Kristallmodifikationen etc., pro Masse oder pro Mol errechnet werden:

$$P = P_{Meß} \cdot W^{-1}$$

Das Seebeck-Element dient bei der Messung der dem Reaktor zugeführten bzw. der aus dem Reaktor abgeführten Wärme anhand der an dem Peltier-Element anliegenden elektrischen Spannung als Steuerglied zur Steuerung der an das Peltier-Element anzulegenden Spannung, wobei die Spannung des Peltier-Elementes, wie gesagt, derart eingestellt wird, daß die in dem Seebeck-Element induzierte Spannung während der Messung stets gleich null ist. Das Peltier-Element dient sowohl als Meßglied zur Messung der bei der Umsetzung frei werdenden Wärme als auch als Temperiereinrichtung des Reaktors, wobei das Peltier-Element je nach Polung der an das Peltier-Element angelegten elektrischen Spannung als Heizoder Kühleinrichtung wirkt.

Bei dem erfindungsgemäßen Verfahren kann ein praktisch beliebiges Peltier-Element verwendet werden. Peltier-Elemente sind als solche bekannt. Sie bestehen in der Regel aus zwei verschiedenen Metallen, wobei im Falle eines elektrischen Stromflusses durch das Peltier-Element sich das eine Metall abkühlt, während sich das andere Metall aufwärmt, weil den Metallen eine unterschiedliche Austrittsenergie zugeführt werden muß, um das jeweilige Metall verlassen zu können. Das Peltier-Element stellt somit eine in Reihe geschaltete Anordnung von Kontakten dar, welche durch einen n-p- bzw. einen p-n-Übergang zweier unterschiedlich dotierter Halbleiter gebildet sein können. Im Falle einer Temperaturdifferenz an den anschlußseitigen Enden des Peltier-Elementes wird folglich in linearer Abhängigkeit eine elektrische Spannung bzw. - im Falle eines geschlossenen Stromkreises - ein elektrischer Strom induziert, wobei die Spannung bzw. der Strom mit steigender Temperaturdifferenz linear ansteigt und mit abfallenden Temperaturdifferenz linear abfällt. Umgekehrt wird beim Anlegen einer steigenden elektrischen Spannung an das Peltier-Element eine linear steigende Temperaturdifferenz und beim Anlegen einer abfallenden elektrischen Spannung eine abfallende Temperaturdifferenz an den beiden Anschlußseiten des Peltier-Elementes erzeugt.

Entsprechend kann bei dem erfindungsgemäßen Verfahren ein praktisch beliebiges Seebeck-Element eingesetzt werden, welches auch als "passives Peltier-Element" bezeichnet wird. Auch Seebeck-Elemente sind als solche bekannt, wobei deren Aufbau im wesentlichen dem Aufbau von Peltier-Elementen entspricht, diese aber im Gegensatz zu Peltier-Elementen nicht aktiv mit einer elektrischen Spannung beaufschlagbar sind.

Das erfindungsgemäße Verfahren ermöglicht sehr kurze Analysenzeiten bei einem sehr geringen Mengenbedarf an Ausgangsstoffen, da das Peltier-Element eine sehr exakte isotherme Temperaturführung bei sehr geringen, dem Reaktor kontinuierlich zugeführten Stoffströmen ermöglicht. Die isotherme Temperaturführung gewährleistet ferner insbesondere bei stark endo- oder exothermen und spontan ablaufenden chemischen Reaktionen, z.B. bei der Ermittlung von Reaktionswärmen von Treib-, Explosivstoffen oder Oxidatoren, eine sehr genaue Messung der bei der Umsetzung frei werdenden Wärmemenge, da im Gegensatz zu einer diskontinuierlichen Umsetzung in einem Kalorimeter keine Temperatursprünge auftreten und hierdurch initiierte Folgereaktionen zuverlässig verhindert werden. Ferner ist bei sich mit steigender Temperatur explosionsartig umsetzenden Stoffgemischen eine maximal mögliche Prozeßsicherheit gegeben. Überdies kann die Berechnung der Reaktionswärme grundsätzlich unmittelbar in Abhängigkeit der an das Peltier-Element anliegenden Spannung bzw. anhand des dieses durchfließenden Stromes bestimmt werden, so daß die Berechnung der Wärmemenge - aufgrund der isothermen Prozeßführung - von den in der Regel unbekannten Wärmekapazitäten der Umsetzungsprodukte unabhängig ist. Schließlich ist es insbesondere im Falle einer Messung der Reaktionswärme einer chemischen Umsetzung aufgrund der kontinuierlichen Prozeßführung möglich, die Messung erst nach einer gewissen Anlaufphase der chemischen Reaktion vorzunehmen, so daß das Meßergebnis nicht durch gegebenenfalls auftretende Startreaktionen oder schwankende Umsätze zu Beginn der Reaktion verfälscht wird, wie es bei adiabatischen Systemen der Fall sein kann. Ist die chemische Reaktion nach einer bestimmten Anlaufphase im wesentlichen konstant, so zeigt sich dies darin, daß das Peltier-Element fortwährend mit derselben Spannung bzw. mit demselben Strom beaufschlagt werden muß, um für einen konstanten Wärmestrom in den bzw. von dem Reaktor zu sorgen und dabei die in dem Seebeck-Element induzierte Spannung auf null zu halten.

Die Lösung der genannten Aufgabe ist erfindungsgemäß bei einem Verfahren der eingangs genannten Art alternativ durch ein Verfahren gemäß Anspruch 2 gegeben.

Dieses Verfahren unterscheidet sich von dem erstgenannten Verfahren dadurch, daß der Reaktor nicht unmittelbar durch das Peltier-Element temperiert wird, sondern daß ein zweites, zwischen dem Reaktor und dem Peltier-Element angeordnetes Seebeck-Element vorgesehen wird, und daß die Ermittlung der bei der Umsetzung der Komponenten in dem Reaktor frei werdenden Wärme nicht in Abhängigkeit der an das Peltier-Element angelegten elektrischen Spannung, sondern in Abhängigkeit der in dem zweiten, zwischen dem Reaktor und dem Peltier-Element angeordneten und mit diesen in wärmeleitender Verbindung stehenden Seebeck-Element geschieht. Die Ermittlung der frei werdenden Wärme einerseits (anhand der in dem Seebeck-Element induzierten elektrischen Spannung) und die Steuerung des Peltier-Elemente andererseits (durch Anlegen einer elektrischen Spannung an das Peltier-Element derart, daß die in dem ersten Seebeck-Element induzierte Spannung im wesentlichen gleich null beträgt) erfolgt in diesem Fall also getrennt voneinander, wodurch eine bessere Ansteuerung des Peltier-Elementes und insbesondere eine noch höhere Meßgenauigkeit möglich ist.

Das Prinzip dieses letztgenannten Verfahrens entspricht ansonsten dem Prinzip des oben genannten Verfahrens, wobei hier eine isotherme Messung der bei der Umsetzung der dem Reaktor kontinuierlich zugeführten Komponenten frei werdenden Wärme in Abhängigkeit der in dem zweiten Seebeck-Element induzierten elektrischen Spannung erfolgt. Dabei wird der Reaktor mittels des Peltier-Elementes so lange indirekt temperiert (d.h. das Peltier-Element temperiert das zweite Seebeck-Element und dieses wiederum den Reaktor, wobei der Reaktor im Falle einer exothermen Reaktion gekühlt bzw. im Falle einer endothermen Reaktion erhitzt wird), bis die in dem mit dem Reaktor in Kontakt stehenden, ersten Seebeck-Element induzierte Spannung im wesentlichen gleich null beträgt, d.h. die Temperatur im Reaktor entspricht im wesentlichen der Temperatur des ersten Seebeck-Elementes und der Wärmestrom zwischen dem Reaktor und dem ersten Seebeck-Element beträgt im wesentlichen gleich null. Nach dieser "Anlaufphase" wird die bei der Umsetzung frei werdende Wärme in Abhängigkeit der in dem zweiten Seebeck-Element induzierten elektrischen Spannung, welche bei einer Temperierung desselben durch das mit diesem in wärmeleitendem Kontakt stehenden Peltier-Elementes derart, daß in dem ersten Seebeck-Element im wesentlichen keine Spannung induziert wird, errechnet, wobei wiederum vorausgesetzt werden kann, daß die dem Reaktor zugeführte bzw. die aus dem Reaktor abgeführte Wärme im wesentlichen vollständig über das zweite, zwischen dem Reaktor und dem Peltier-Element angeordnete Seebeck-Element zu- bzw. abgeführt wird und die Umsetzung im Reaktor ferner isotherm geschieht, solange die in dem ersten Seebeck-Element induzierte Spannung im wesentlichen null beträgt. Die in dem zweiten Seebeck-Element induzierte Spannung ist indes proportional zu der Temperaturdifferenz seines mit dem Peltier-Element und seines mit dem Reaktor in Verbindung stehenden Anschlusses. Folglich wird dem Reaktor über das zweite, durch das Peltier-Element temperierte Seebeck-Element stets die gesamte, für eine isotherme Prozeßführung im Reaktor erforderliche Wärme zugeführt bzw. wird über das zweite Seebeck-Element die gesamte, für eine isotherme Prozeßführung erforderliche Wärme aus dem Reaktor abgeführt. Folglich ist auch die bei einer solchen isothermen Prozeßführung in dem zweiten, sowohl mit dem Reaktor als auch mit dem Peltier-Element in wärmeleitender Verbindung stehenden Seebeck-Element induzierte elektrische Spannung $U_{Seebeck\ 2}$ proportional zu der bei der Umsetzung der Komponenten im Reaktor frei werdenden Wärmeleistung $P_{Meß}$:

$$P_{Meß} = c \cdot U_{Seebeck\ 2}$$

wobei c eine Proportionalitätskonstante ist, welche insbesondere von der Art des eingesetzten zweiten Seebeck-Elementes und der Geometrie sowie dem Aufnahmevermögen des Reaktors abhängig ist. Die Proportionalitätskonstante kann auf die oben genannte Weise einfach durch Kalibrierung ermittelt werden, wobei sie insbesondere von den Wärmekapazitäten der Umsetzungsprodukte unabhängig ist, da die Messung isotherm durchgeführt wird. Aus der gemessenen Wärmeleistung $P_{Meß}$ kann unter Berücksichtigung des Umsatzes bzw. des Wirkungsgrades W wiederum die absolute Wärmeleistung P der chemischen Reaktion bzw. der physikalischen Umsetzung pro Masse oder pro Mol errechnet werden:

$$P = P_{Meß} \cdot W^{-1}$$

Während das erste Seebeck-Element bei der Messung der dem Reaktor zugeführten bzw. der aus dem Reaktor abgeführten Wärme wiederum als Steuerglied zur Steuerung der an das Peltier-Element anzulegenden Spannung dient, welche, wie gesagt, derart eingestellt wird, daß die in dem ersten Seebeck-Element induzierte Spannung während der Messung stets gleich null ist, dient das zweite Seebeck-Element als separates Meßglied zur Messung der bei der Umsetzung der Komponenten im Reaktor frei werdenden Wärme anhand der dort induzierten Spannung. Das Peltier-Element übernimmt in diesem Fall folglich ausschließlich die Funktion einer sowohl als Heizung als auch als Kühlung einsetzbaren Temperiereinrichtung des Reaktors, wodurch eine gegenüber dem vorgenannten Verfahren noch höhere Meßgenauigkeit erzielt werden kann, da die bei der Umsetzung frei werdende Wärme separat, d.h. ausschließlich in Abhängigkeit der in dem zweiten Seebeck-Element induzierten Spannung geschieht.

Selbstverständlich können grundsätzlich mehrere, parallel geschaltete Peltier-Elemente bzw. mehrere, parallel geschaltete erste und/oder zweite Seebeck-Elemente eingesetzt werden, wobei diese zweckmäßig mit einem möglichst großen Oberflächenbereich des Reaktors in wärmeleitender Verbindung stehen, um nicht erfaßbare Wärmeverluste des Reaktors so gering wie möglich zu halten.

In bevorzugter Ausführung ist vorgesehen, daß dasjenige Seebeck-Element, welches als Steuerglied für die an das Peltier-Element anzulegende Spannung dient und dessen induzierte Spannung während der Messung der frei werdenden Wärme auf etwa null gehalten wird (im Falle des letztgenannten Verfahrens also das erste Seebeck-Element), an seiner dem Reaktor abgewandten Seite mit einem im wesentlichen isothermen Wärmespeicher in Kontakt gebracht wird. Auf diese Weise kann die gewünschte Umsetzungstemperatur im Reaktor auf einfache Weise durch die Temperatur des Wärmespeichers eingestellt werden, indem - nachdem das (erste) Seebeck-Element auf eine sowohl dem Wärmespeicher als auch dem Reaktor entsprechende Temperatur gebracht worden ist und in dem (ersten) Seebeck-Element folglich keine Spannung induziert wird - dem Reaktor über das Peltier-Element stets die für eine isotherme Betriebsweise erforderliche Wärme zugeführt bzw. die für eine isotherme Betriebsweise erforderliche Wärme aus dem Reaktor abgeführt wird. Wie bereits erwähnt, geschieht dies entweder direkt mittels eines unmittelbar mit dem Reaktor in wärmeleitendem Kontakt stehenden Peltier-Elementes oder indirekt mittels eines zwischengeschalteten - zweiten - Seebeck-Elementes als separatem Meßglied.

Entsprechend wird das Peltier-Element bevorzugt an seiner dem Reaktor abgewandten Seite mit einem im wesentlichen isothermen Wärmespeicher in Kontakt gebracht, um für eine feste Bezugsgröße der zu der Spannung, welche an dem auch als Meßglied dienenden Peltier-Element anliegt bzw. welche in dem als Meßglied dienenden zweiten Seebeck-Element induziert wird, proportionalen Temperaturdifferenz zwischen dem Peltier-Element und dem Reaktor bzw. zwischen dem Peltier-Element und dem zwischengeschalteten, zweiten Seebeck-Element zu sorgen.

Der jeweilige Wärmespeicher wird zweckmäßig auf die gewünschte Umsetzungstemperatur im Reaktor temperiert, wobei das Seebeck-Element und das Peltier-Element vorzugsweise mit ein und demselben Wärmespeicher oder mit jeweils einem separaten Wärmespeicher, welche miteinander in wärmeleitendem Kontakt stehen, in Kontakt gebracht werden.

Der/die Wärmespeicher wird/werden bevorzugt mit einem Fluid mit einer gegenüber Luft höheren Wärmekapazität, insbesondere mit einer Flüssigkeit, betrieben, um für eine effektive Wärmeleitung zwischen dem als Steuerglied dienenden (ersten) Seebeck-Element und dem Wärmespeicher und/oder zwischen dem Peltier-Element und dem Wärmespeicher zu sorgen und den mit dem Wärmespeicher in wärmeleitendem Kontakt stehenden Anschluß des jeweiligen Elementes stets auf einer konstanten Temperatur zu halten. Ferner läßt sich die als Wärmespeicher dienende Flüssigkeit z.B. mittels eines Kryostaten auf einfache Weise auf die gewünschte Temperatur bringen.

Um meßtechnisch nicht erfaßbare Wärmeverluste des Reaktors so gering wir möglich zu halten, wird die nicht mit einem Seebeck-Element oder mit einem Peltier-Element in wärmeleitender Verbindung stehende Oberfläche des Reaktors vorzugsweise wärmeisoliert. Wie bereits erwähnt, ist es zu demselben Zweck zusätzlich von Vorteil, wenn ein möglichst großer Anteil der Oberfläche des Reaktors mit einem oder mehreren, parallel geschalteten Seebeck- bzw. Peltier-Elementen in wärmeleitendem Kontakt steht.

Es ist vorgesehen, daß ein Mikroreaktor mit einem Aufnahmevermögen von höchstens 100 $\mu l$, eingesetzt wird. Ein solcher Mikroreaktor läßt sich mittels des Peltier-Elementes - sei es direkt oder indirekt unter Zwischenschaltung eines (zweiten) Seebeck-Elementes - sehr exakt und schnell temperieren und insbesondere auf exakt derselben Temperatur isotherm betreiben. Ferner sind nur geringe Mengen der jeweils miteinander in Reaktion zu bringenden Komponenten vonnöten.

Das Peltier-Element wird vorzugsweise an der dem Seebeck-Element entgegengesetzten Seite des Reaktors angeordnet.

In bevorzugter Ausführung ist vorgesehen, daß ein konstanter Massenstrom der dem Reaktor kontinuierlich zugeführten Komponenten eingestellt wird, so daß die Messung der bei der Umsetzung der Komponenten frei werdenden Wärme bei einem konstanten Massendurchsatz durch den Reaktor erfolgt. Selbstverständlich kann die bei der Umsetzung frei werdende Wärme alternativ auch bei veränderlichen Massenströmen einer oder sämtlicher dem Reaktor zugeführten Komponenten gemessen werden, wobei es insbesondere möglich ist, den Massenstrom nur einer Komponente zu verändern, um die frei werdende Wärme in Abhängigkeit der Zusammensetzung der Mischung aus den Komponenten zu bestimmen.

In Weiterbildung des erfindungsgemäßen Verfahrens ist vorgesehen, daß die Zusammensetzung der aus dem Reaktor kontinuierlich abgezogenen Komponenten ermittelt wird. Auf diese Weise läßt sich der Umsatz einer in dem Reaktor ablaufenden chemischen und/oder physikalischen Reaktion in Abhängigkeit der Zusammensetzung der dem Reaktor zugeführten und der aus dem Reaktor abgezogenen Komponenten ermitteln, so daß insbesondere im Falle einer Bestimmung der Reaktionswärme einer chemischen Reaktion diese als absolute Reaktionswärme pro Masse bzw. pro Mol der eingesetzten Komponenten errechnet werden kann.

Die Ermittlung der Zusammensetzung der aus dem Reaktor abgezogenen Komponenten kann insbesondere spektroskopisch, z.B. UV-, IR-, Röntgenfluoreszenz- oder massenspektroskopisch, geschehen. Selbstverständlich sind auch beliebige andere bekannte Analyseverfahren einsetzbar, welche insbesondere eine auch quantitative Bestimmung der Umsetzungsprodukte ermöglichen.

Die Lösung des der Erfindung zugrunde liegenden Problems ist in vorrichtungstechnischer Hinsicht durch eine Vorrichtung gemäß Anspruch 14 gegeben.

Die erfindungsgemäße Vorrichtung ermöglicht eine isotherme Messung der bei der Umsetzung der dem Reaktor über die Zulaufleitung kontinuierlich zugeführten Komponenten frei werdenden Wärme, wobei die Umsetzungsprodukte über die Ablaufleitung kontinuierlich abgeführt werden können. Die Messung der Wärme kann mittels des zugleich als Temperiereinrichtung dienenden Peltier-Elementes auf die oben in Verbindung mit dem erfindungsgemäßen Verfahren geschilderte Weise geschehen.

Eine alternative Vorrichtung zur Messung der bei chemischen und/oder physikalischen Umsetzungen frei werdenden Wärme der eingangs genannten Art ist durch eine Vorrichtung gemäß Anspruch 15 gegeben.

Im Gegensatz zu der erstgenannten Ausführungsform der Vorrichtung dient in diesem Fall das durch das erste Seebeck-Element steuerbare Peltier-Element ausschließlich zur Erwärmung (im Falle einer endothermen Reaktion) bzw. zur Kühlung (im Falle eine exothermen Reaktion) des Reaktors, während das zwischen den Reaktor und das Peltier-Element zwischengeschaltete zweite Seebeck-Element die Funktion eines separaten Meßgliedes übernimmt. Die Messung der Wärme kann wiederum auf die oben in Verbindung mit dem erfindungsgemäßen Verfahren erläuterte Weise geschehen. Der Vorteil eines separaten Meßgliedes liegt insbesondere in einer erhöhten Exaktheit beim Meßvorgang und in einer besseren Steuerbarkeit der isothermen Prozeßführung.

In bevorzugter Ausführung ist vorgesehen, daß das Peltier-Element derart in Abhängigkeit der in demjenigen Seebeck-Element, welches als Steuerglied für die an das Peltier-Element anzulegende Spannung dient (im Falle der letztgenannten Vorrichtung also das erste Seebeck-Element), induzierten elektrischen Spannung steuerbar ist, daß die in diesem Seebeck-Element induzierte Spannung stets im wesentlichen gleich null beträgt. Auf diese Weise kann sichergestellt werden, daß dem Reaktor - solange die in dem als Steuerglied dienenden (ersten) Seebeck-Element induzierte Spannung etwa gleich null ist - über dieses Seebeck-Element praktisch keine Wärme zu- oder abgeführt wird, sondern im wesentlichen die gesamte Wärme über das Peltier-Element bzw. - im Falle eines als separates Meßglied dienenden zweiten Seebeck-Elementes - über das zweite Seebeck-Element zu- oder abgeführt wird. Die bei der Umsetzung frei werdende Wärme ist folglich proportional zu der an das Peltier-Element anzulegenden Spannung, welche für eine isotherme Prozeßführung erforderlich ist, bzw. zu der in dem zweiten Seebeck-Element induzierten Spannung, so daß praktisch die gesamte frei werdende Wärme ohne nennenswerte Verluste erfaßt werden kann.

In bevorzugter Ausführung ist vorgesehen, daß dasjenige Seebeck-Element, welches als Steuerglied für die an das Peltier-Element anzulegende Spannung dient (im Falle der letztgenannten Vorrichtung also das erste Seebeck-Element), an seiner dem Reaktor abgewandten Seite mit einem im wesentlichen isothermen Wärmespeicher in wärmeleitendem Kontakt steht. Derart ist die gewünschte Umsetzungstemperatur im Reaktor auf einfache Weise durch die Temperatur des Wärmespeichers einstellbar, indem - nachdem das (erste) Seebeck-Element auf eine sowohl dem Wärmespeicher als auch dem Reaktor entsprechende Temperatur gebracht worden ist und in dem (ersten) Seebeck-Element folglich keine Spannung induziert wird - dem Reaktor über das Peltier-Element stets die für eine isotherme Betriebsweise erforderliche Wärme zugeführt bzw. die für eine isotherme Betriebsweise erforderliche Wärme aus dem Reaktor abgeführt wird.

Auf entsprechende Weise steht vorzugsweise auch das Peltier-Element an seiner dem Reaktor abgewandten Seite mit einem im wesentlichen isothermen Wärmespeicher in wärmeleitendem Kontakt, um für eine feste Bezugsgröße der zu der Spannung, welche an dem auch als Meßglied dienenden Peltier-Element anliegt bzw. welche in dem als Meßglied dienenden zweiten Seebeck-Element induziert wird, proportionalen Temperaturdifferenz zwischen dem Peltier-Element und dem Reaktor bzw. zwischen dem Peltier-Element und dem zwischengeschalteten, zweiten Seebeck-Element zu sorgen.

Wie bereits angedeutet, ist der Wärmespeicher zweckmäßig temperierbar, wobei das (erste) Seebeck-Element und das Peltier-Element vorzugsweise mit ein und demselben Wärmespeicher oder mit jeweils einem separaten Wärmespeicher, welche miteinander in wärmeleitendem Kontakt stehen, in wärmeleitendem Kontakt stehen. Der/die Wärmespeicher ist/sind bevorzugt von einem mit einem Fluid mit einer gegenüber Luft höheren Wärmekapazität, insbesondere einer Flüssigkeit, befüllten Reservoir, z.B. in Form eines Kryostaten, gebildet.

Um nicht erfaßbare Wärmeverluste des Reaktors so weit wie möglich zu vermeiden, ist die nicht mit einem Seebeck-Element oder mit einem Peltier-Element in Verbindung stehende Oberfläche des Reaktors zweckmäßig wärmeisoliert. Ferner ist es von Vorteil, wenn ein möglichst großer Anteil der Oberfläche des Reaktors mit einem oder mehreren, parallel geschalteten Seebeck- bzw. Peltier-Elementen in wärmeleitendem Kontakt steht.

Es ist vorgesehen, daß der Reaktor von einem Mikroreaktor mit einem Aufnahmevermögen von höchstens 100 μl, gebildet ist, so daß nur geringe Mengen der jeweils miteinander in Reaktion zu bringenden Komponenten eingesetzt werden müssen. Dabei beträgt die Breite des Reaktors vorzugsweise ein Mehrfaches seiner Höhe, d.h. der Reaktor ist sehr flach ausgebildet und läßt sich somit sehr exakt und schnell temperieren und insbesondere auf exakt derselben Temperatur isotherm betreiben, da insbesondere in Verbindung mit einer kontinuierlichen Betriebsweise des Reaktors die Ausbildung eines Temperaturgradienten praktisch gänzlich verhindert wird.

Der Reaktor kann beispielsweise im wesentlichen zylindrisch oder quader- bzw. prismenförmig sein, wobei sein Durchmesser ein Mehrfaches seiner Höhe beträgt. Dabei stehe zweckmäßig jede Grundfläche des insbesondere sehr flach ausgestalteten Reaktors im wesentlichen vollständig mit dem wenigstens einen Seebeck-Element oder dem wenigstens einen Peltier-Element in Verbindung, d.h. entweder steht die eine Grundfläche des Reaktors mit dem als Steuerglied dienenden Seebeck-Element und die andere Grundfläche mit dem als Meßglied und Temperiereinrichtung dienenden Peltier-Element in Verbindung, oder die eine Grundfläche des Reaktors steht mit dem als Steuerglied dienenden ersten Seebeck-Element und die andere Grundfläche mit dem als Meßglied dienenden, zwischen dem Peltier-Element und dem Reaktor angeordneten, zweiten Seebeck-Element in Verbindung. Das unmittelbar oder - im Falle eines als separates Meßglied dienenden zweiten Seebeck-Elementes - über das zweite Seebeck-Element mittelbar mit dem Reaktor in wärmeleitender Verbindung stehende Peltier-Element ist auf diese Weise an der dem als Steuerglied dienenden (ersten) Seebeck-Element entgegengesetzten Seite des Reaktors angeordnet.

In bevorzugter Ausführung ist vorgesehen, daß jede Zuleitung des Reaktors mit einer steuerbaren Pumpe ausgestattet ist. Die eingesetzte(n) Pumpe(n) ist/sind zweckmäßig zur Förderung von Fluiden mit einem Volumenstrom im μl/min-Bereich bis in den ml/min-Bereich geeignet. Neben herkömmlichen Pumpen kommen auch Mikropumpen in Betracht, welche z.B. als Mikromembranpumpen mit einer mittels eines Aktuators betätigbaren Siliciummembran ausgebildet sein können und als solche bekannt sind.

Der Reaktor kann insbesondere auch zwei oder mehr Zuleitungen aufweisen, um dem Reaktor mehrere Reaktanden getrennt voneinander zuzuführen. Dabei ist zweckmäßig jede Zuleitung mit einer insbesondere getrennt voneinander steuerbaren Pumpe, beispielsweise einer Mikropumpe, ausgestattet, um dem Reaktor die verschiedenen Reaktanden mit dem jeweils gewünschten Massen- bzw. Volumenstrom zuzuführen.

In Weiterbildung ist vorgesehen, daß der Ableitung des Reaktors wenigstens ein Spektroskop zur Ermittlung der Zusammensetzung der aus dem Reaktor abgezogenen Komponenten nachgeordnet ist. Dabei kann das Spektroskop von einem Infrarot-, Ultraviolett-, Röntgenfluoreszenz- und/oder Massenspektroskop oder auch von einer beliebigen anderen Analyseneinrichtung gebildet sein, welche insbesondere eine auch quantitative Bestimmung der Umsetzungsprodukte gewährleistet.

Die Erfindung betrifft ferner ein Computerprogrammprodukt zur Durchführung eines Verfahrens der vorgenannten Art mittels einer vorstehend beschriebenen Vorrichtung. Das Computerprogramm kann insbesondere auf einem Datenträger, z.B. einem magnetischen, optischen oder faseroptischen Datenträger, wie einer Diskette, einer CD-ROM, einer DVD oder einer Festplatte, gespeichert sein.

Nachstehend ist die Erfindung anhand von Ausführungsbeispiels unter Bezugnahme auf die Zeichnung näher erläutert. Dabei zeigen:

Fig. 1     eine schematische Schnittansicht eines Ausführungsbeispiels einer Vorrichtung zur Messung der bei chemischen und/oder physikalischen Umsetzungen frei werdenden Wärme mit jeweils einem separaten Steuer- und Meßglied und einer separaten Temperiereinrichtung;

Fig. 2     ein mittels einer Vorrichtung gemäß Fig. 1 aufgenommenes Meßdiagramm der ermittelten Wärmeleistung einer chemischen Reaktion bei verschiedenen Volumenströmen der eingesetzten Edukte; und

Fig. 3     ein mittels einer Vorrichtung gemäß Fig. 1 aufgenommenes Meßdiagramm der ermittelten Wärmeleistung einer anderen Reaktion bei verschiedenen Volumenströmen der eingesetzten Edukte.

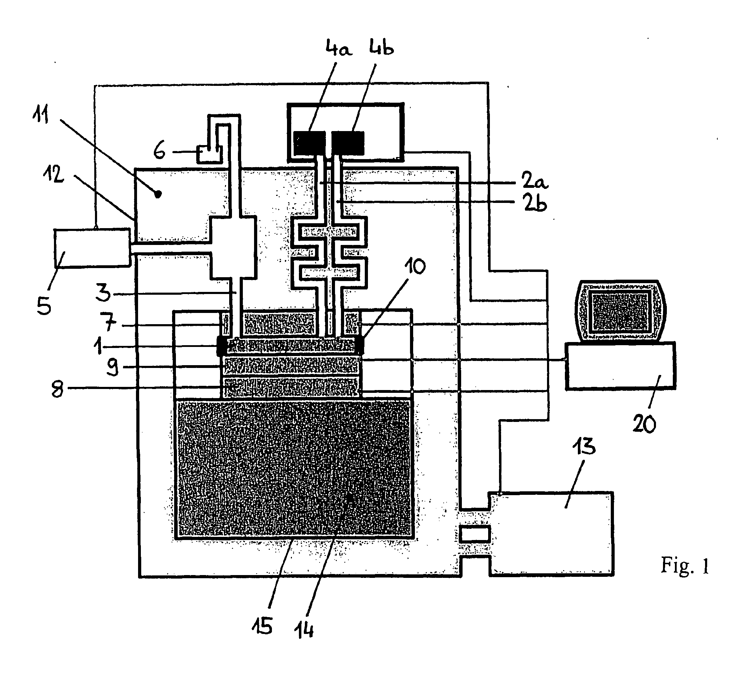

Die in Fig. 1 wiedergegebene Vorrichtung umfaßt einen Reaktor 1, welcher beim vorliegenden Ausführungsbeispiel als Mikroreaktor mit einem Aufnahmevermögen von etwa 70 μl ausgebildet ist. Der Reaktor 1 besitzt eine etwa quaderförmige Ausgestaltung mit einer gegenüber seiner Breite bzw. seinem Durchmesser sehr geringen Höhe. Der auf diese Weise sehr flach ausgebildete Reaktor besteht aus einem Material mit guter Leitfähigkeit, insbesondere aus einem Metall oder einer Metallegierung, z.B. aus Silicium. Als geeigneter Reaktor 1 kommt beispielsweise ein accoris® Si-Mikroreaktor in Betracht.

In den Reaktor 1 münden im Bereich seiner in der Zeichnung rechten Seite zwei Zuleitungen 2a, 2b etwa parallel ein, während der Reaktor 1 im Bereich seiner in der Zeichnung linken Seite mit einer Ableitung 3 ausgestattet ist. Jede Zuleitung 2a, 2b weist eine separate Pumpe 4a, 4b auf, welche getrennt voneinander steuerbar sind. Auf diese Weise kann der Reaktor 1 kontinuierlich mit jeweils einem individuellen Volumenstrom zweier miteinander zur Umsetzung zu bringenden Komponenten gespeist werden, wobei die Umsetzungsprodukte nach Durchströmen des Reaktors über die Ablaufleitung 3 kontinuierlich abgeführt werden können. Der Ablaufleitung 3 ist ein z.B. als IR- oder UV-Durchflußspektroskop ausgebildetes Spektroskop 5 nachgeordnet, um die Zusammensetzung des aus dem Reaktor 1 abgeführten Stoffstromes zu ermitteln. Stromab des Spektroskopes 5 mündet die Ableitung 3 in einen offenen oder geschlossenen Sammelbehälter 6, welcher die Umsetzungsprodukte aufnimmt.

An der in der Fig. 1 oberen Grundfläche des Reaktors 1 steht dieser im wesentlichen vollständig mit einem ersten Seebeck-Element 7 in wärmeleitendem Kontakt, welches - wie weiter unten im einzelnen erläutert - als Steuerglied für ein als Temperiereinrichtung des Reaktors 1 dienendes Peltier-Element 8 vorgesehen ist. An seiner dem ersten Seebeck-Element 7 abgewandten, in Fig. 1 unteren Grundfläche steht der Reaktor im wesentlichen vollständig mit einem zweiten Seebeck-Element 9 in wärmeleitendem Kontakt, welches als Meßeinrichtung zur Ermittlung der bei einer Umsetzung im Reaktor frei werdenden Wärme dient. Das zweite Seebeck-Element 9 steht an seiner dem Reaktor 1 abgewandten, in Fig. 1 unteren Seite wiederum mit dem Peltier-Element 8 in wärmeleitendem Kontakt. Letzteres kann in Abhängigkeit der an dieses angelegten elektrischen Spannung als Heizung oder auch als Kühlung des Reaktors 1 über das zwischengeschaltete zweite Seebeck-Element 9 eingesetzt werden. Ist die Umsetzung im Reaktor 1 exotherm (d.h. es wird eine positive Wärmetönung ermittelt), so kann das Peltier-Element 8 als Kühlung eingesetzt werden; ist die Umsetzung im Reaktor 1 hingegen endotherm (d.h. es wird eine negative Wärmetönung ermittelt), so kann das Peltier-Element 8 als Heizung eingesetzt werden. An seiner freien Mantelfläche ist der Reaktor 1 mit einer wärmeisolierenden Beschichtung 10 versehen.

Das als Steuerglied dienende, in Fig. 1 oberhalb des Reaktors 1 angeordnete Seebeck-Element 7 steht an seiner dem Reaktor 1 abgewandten Seite mit einem Wärmespeicher 11 in wärmeleitendem Kontakt. Der Wärmespeicher 11 ist von einem Reservoir 12 gebildet, welches mit einer Flüssigkeit mit einer gegenüber Luft höheren Wärmekapazität, z.B. Isopropanol, befüllt ist. Die als Wärmespeicher 11 dienende Flüssigkeit ist mittels eines Kryostaten 13 bedarfsweise abkühlbar oder aufheizbar, wobei der Wärmespeicher 11 mittels des Kryostaten 13 insbesondere auch auf einer voreinstellbaren, konstanten Temperatur gehalten werden kann, so daß dieser im wesentlich isotherm ist. Die Zuleitungen 2a, 2b des Reaktors 1 sind so angeordnet, daß die den Wärmespeicher 11 durchsetzen, so daß die miteinander zur Umsetzung zu bringenden Komponenten dem Reaktor 1 mit einer konstanten, der Temperatur des Wärmespeichers 11 etwa entsprechenden Temperatur zugeführt werden können. Zu diesem Zweck sind die Zuleitungen 2a, 2b in ihrem den Wärmespeicher 11 durchsetzenden Bereich nach Art von Heizschlangen ausgebildet.

An seiner dem Reaktor 1 bzw. dem zweiten Seebeck-Element 9 abgewandten Seite steht das Peltier-Element 8 mit einem weiteren Wärmespeicher 14 in Verbindung, welcher z.B. ebenfalls von einem mit einer Flüssigkeit befüllten Reservoir 15 gebildet sein kann. Der Wärmespeicher 14 steht über eine große Wärmetauschfläche mit dem Wärmespeicher 11 in wärmeleitendem Kontakt, so daß erster gemeinsam mit dem Wärmespeicher 11 mittels des Kryostaten temperierbar ist und insbesondere isotherm auf etwa derselben Temperatur wie die des Wärmespeichers 11 gehalten werden kann.

Der Vorrichtung ist eine Datenverarbeitungseinheit 20, wie ein Computer, zugeordnet. Die Datenverarbeitungseinheit 20 steht mit wenigstens einem magnetischen, optischen oder faseroptischen Datenträger (nicht dargestellt), wie einer Festplatte, einer Diskette, einer CD-ROM, einer DVD oder dergleichen in Wirkverbindung, auf welcher ein Computerprogrammprodukt gespeichert ist, welches zur Durchführung eines weiter unten im einzelnen beschriebenen Verfahrens zur Messung der bei chemischen und/oder physikalischen Umsetzungen in dem Reaktor 1 frei werdenden Wärme geeignet ist.

Mittels der Datenverarbeitungseinheit 20 ist das Peltier-Element 8 derart in Abhängigkeit der in dem ersten Seebeck-Element 7 induzierten elektrischen Spannung steuerbar, daß eine im wesentlichen isotherme Betriebsweise des Reaktors 1 möglich ist. Dabei ist das Peltier-Element 8 insbesondere so in Abhängigkeit der in dem ersten Seebeck-Element 7 induzierten Spannung steuerbar, daß die in diesem Seebeck-Element 7 induzierte Spannung stets im wesentlich gleich null beträgt.

Die in Fig. 1 dargestellte Vorrichtung entspricht im übrigen einem Ausführungsbeispiel einer Vorrichtung gemäß Anspruch 16, welche aufgrund des von dem zweiten Seebeck-Element 9 gebildeten, separaten Meßgliedes eine sehr hohe Meßgenauigkeit sowie eine einfache und schnelle Steuerbarkeit aufweist. Ein Ausführungsbeispiel für eine Vorrichtung gemäß Anspruch 15 kann identisch aufgebaut sein mit der Ausnahme, daß kein zweites Seebeck-Element 9 vorgesehen ist und stattdessen das Peltier-Element 8 unmittelbar mit dem Reaktor 1 in wärmeleitendem Kontakt steht. Das Peltier-Element 8 dient dann sowohl als Temperiereinrichtung des Reaktors 1 als auch als Meßglied zur Ermittlung der bei der Umsetzung im Reaktor frei werdenden Wärme.

Nachstehend ist die Betriebsweise der in Fig. 1 wiedergegebenen Vorrichtung näher erläutert:

Zur Durchführung eines Verfahrens zur Messung der bei einer exothermen oder endothermen chemischen und/oder physikalischen Umsetzung zwischen zwei Ausgangskomponenten A und B frei werdenden Wärme wird die gesamte Vorrichtung zunächst mittels des Kryostaten 13 auf die gewünschte Umsetzungs- bzw. Reaktionstemperatur T gebracht, ohne das Peltier-Element 8 zu aktivieren. Am Ende dieser Temperierphase weisen sowohl der Reaktor 1 als auch die Seebeck-Elemente 7, 9 und das Peltier-Element 8 dieselbe Temperatur wie die Wärmespeicher 11, 14 auf. Die Einstellung eines solchen Gleichgewichtes kann dadurch nachgewiesen werden, daß die in den beiden Seebeck-Elementen 7, 9 induzierte elektrische Spannung gemessen wird. Beträgt diese etwa null, so ist sichergestellt, daß die Temperaturdifferenz der beiden Bauteile, die an jeweils entgegengesetzten Seiten der Seebeck-Elemente 7, 9 mit diesen in wärmeleitendem Kontakt stehen, etwa gleich null beträgt. Nach Abschluß der Temperierphase werden die Wärmespeicher 11, 14 mittels des Kryostaten 13 isotherm auf der gewünschten Umsetzungstemperatur gehalten.

Sodann werden die beiden Komponenten A und B dem Reaktor 1 mittels der Pumpen 4a, 4b über jeweils eine Zuleitung 2a, 2b mit dem jeweils gewünschten Volumenstrom kontinuierlich zugeführt und im Reaktor miteinander zur Umsetzung gebracht. Zugleich wird die Zusammensetzung der aus dem Reaktor 1 über die Ableitung 3 abgezogenen Reaktionsprodukte mittels des Spektroskopes 5 fortwährend ermittelt, um den Umsatz der in dem Reaktor 1 vonstatten gehenden chemischen Reaktion bestimmen zu können, so daß gegebenenfalls die Ermittlung der spezifischen Reaktionswärme der chemischen Reaktion zwischen den Edukten A und B möglich ist.

Handelt es sich bei der Umsetzung der Komponente A mit der Komponente B um eine exotherme Reaktion, so erwärmt sich der Reaktor 1, wobei die Wärme sowohl an das erste Seebeck-Element 7 als auch an das zweite Seebeck-Element 9 abgegeben wird. Die dem Reaktor 1 zugewandte Seite des ersten Seebeck-Elementes 7 wird folglich erwärmt. Da die dem Reaktor 1 abgewandte Seite des ersten Seebeck-Elementes 7 von dem Wärmespeicher 11 fortwährend auf derselben Temperatur isotherm gehalten wird, wird in dem ersten Seebeck-Element 7 eine elektrische Spannung induziert. Das Peltier-Element 8 wird nun in Abhängigkeit der in dem ersten Seebeck-Element 7 induzierten Spannung derart gesteuert, daß es den Reaktor 1 so lange über das zwischengeschaltete zweite Seebeck-Element 9 indirekt kühlt, bis die Temperatur des Reaktors 1 etwa der Temperatur des Wärmespeichers 11, d.h. der gewünschten Reaktionstemperatur, entspricht. Die in dem ersten Seebeck-Element 7, welches als Steuerglied für das Peltier-Element 8 dient, induzierte Spannung beträgt folglich wieder gleich null. Da zwischen dem Reaktor 1 und dem ersten Seebeck-Element 7 nun keine Temperaturdifferenz mehr herrscht, ist sichergestellt, daß im wesentlichen die gesamte Reaktionswärme über das als Meßglied dienende, zwischen dem Reaktor 1 und dem Peltier-Element 8 angeordnete, zweite Peltier-Element 9 aus dem Reaktor 1 abgeführt wird.

Handelt es sich bei der Umsetzung der Komponente A mit der Komponente B um eine endotherme Reaktion, so kühlt sich der Reaktor 1 ab, wobei die Wärme sowohl über das erste Seebeck-Element 7 als auch über das zweite Seebeck-Element 9 aufgenommen wird. Die dem Reaktor 1 zugewandte Seite des ersten Seebeck-Elementes 7 wird folglich abgekühlt. Da die dem Reaktor 1 abgewandte Seite des ersten Seebeck-Elementes 7 von dem Wärmespeicher 11 fortwährend auf derselben Temperatur isotherm gehalten wird, wird in dem ersten Seebeck-Element 7 eine elektrische Spannung induziert. Das Peltier-Element 8 wird nun in Abhängigkeit der in dem ersten Seebeck-Element 7 induzierten Spannung derart gesteuert, daß es den Reaktor 1 so lange über das zwischengeschaltete zweite Seebeck-Element 9 indirekt erwärmt, bis die Temperatur des Reaktors 1 etwa der Temperatur des Wärmespeichers 11, d.h. der gewünschten Reaktionstemperatur, entspricht. Die in dem ersten Seebeck-Element 7, welches als Steuerglied für das Peltier-Element 8 dient, induzierte Spannung beträgt folglich wieder gleich null. Da zwischen dem Reaktor 1 und dem ersten Seebeck-Element 7 nun keine Temperaturdifferenz mehr herrscht, ist sichergestellt, daß im wesentlichen die gesamte Reaktionswärme über das als Meßglied dienende, zwischen dem Reaktor 1 und dem Peltier-Element 8 angeordnete, zweite Peltier-Element 9 aus dem Reaktor 1 aufgenommen wird.

Nach einer solchen "Anlaufphase" kann die dem Reaktor 1 nunmehr praktisch vollständig über das als Meßglied dienende zweite Seebeck-Element 9 zu- bzw. abgeführte Wärme in Abhängigkeit der in diesem Seebeck-Element 9 induzierten elektrischen Spannung ermittelt werden. Währenddessen wird das Peltier-Element 8 über das erste Seebeck-Element 7 fortwährend so gesteuert, daß die in letzterem induzierte Spannung stets im wesentlichen gleich null beträgt. D.h. die an das Peltier-Element 8 angelegte elektrische Spannung wird so gesteuert, daß das Peltier-Element 8 den Reaktor 1 über das zwischengeschaltete zweite Seebeck-Element 9 derart temperiert, daß der Reaktor 1 stets isotherm auf der Temperatur des ersten Seebeck-Elementes 7 und somit auf der Temperatur des Wärmespeichers 11 gehalten wird. Da ferner die dem zweiten Seebeck-Element 9 abgewandte Seite des Peltier-Elementes 8 stets isotherm auf der Temperatur des Wärmespeichers 14 gehalten wird, die der Temperatur des Wärmespeichers 11 entspricht, ist weiterhin sichergestellt, daß es in dem Seebeck-Element 9 nicht zu einem Wärmestau kommen kann, welcher das Meßergebnis verfälschen könnte.

Die nun praktisch ausschließlich über das zweite Seebeck-Element 9 dem Reaktor 1 zugeführte Wärmeleistung $P_{meß}$ (im Falle einer endothermen Umsetzung) bzw. die nun praktisch ausschließlich über das zweite Seebeck-Element 9 aus dem Reaktor 1 abgeführte Wärmeleistung $P_{Meß}$ (im Falle einer exothermen Umsetzung) ist proportional zu der in dem als Meßglied dienenden, zweiten Seebeck-Element 9 induzierten elektrischen Spannung $U_{Seebeck\,2}$ und läßt sich folglich nach Ermittlung einer Proportionalitätskonstante c durch Kalibrierung berechnen:

$$P_{Me\ss} = c \cdot U_{Seebeck\,2}$$

Ferner läßt sich die bei der Umsetzung frei werdende absolute Wärmeleistung P pro Masse oder pro Mol der eingesetzten Komponenten A und B unter Berücksichtigung des spektroskopisch ermittelten Wirkungsgrades W errechnen:

$$P = P_{Me\ss} \cdot W^{-1}$$

Weist die Vorrichtung kein zweites Seebeck-Element 9 auf, sondern steht das Peltier-Element 8 unmittelbar mit dem Reaktor 1 in wärmeleitendem Kontakt, so geschieht die Messung der bei der Umsetzung im Reaktor 1 frei werdenden Wärme auf entsprechende Weise mit der Maßgabe, daß das Peltier-Element 8 sowohl als Temperiereinrichtung des Reaktors 1 als auch als Meßglied zur Ermittlung der bei der Umsetzung der Komponenten A und B im Reaktor 1 frei werdenden Wärme verwendet wird. Die elektrische Spannung, mit welcher das Peltier-Element 8 beaufschlagt werden muß, um den Reaktor 1 isotherm auf der Temperatur des Wärmespeichers 11 zu halten, so daß in dem (ersten) Seebeck-Element 7 keine elektrische Spannung induziert wird, wird folglich unmittelbar zur Ermittlung der im Reaktor frei werdenden Wärme herangezogen.

Nachstehend ist die Erfindung anhand von konkreten Ausführungsbeispielen näher erläutert. Dabei wurden sämtliche in den folgenden Beispielen beschriebenen Messungen auf einer vorstehend unter Bezugnahme auf Fig. 1 erläuterten Vorrichtung durchgeführt.

**Beispiel 1**

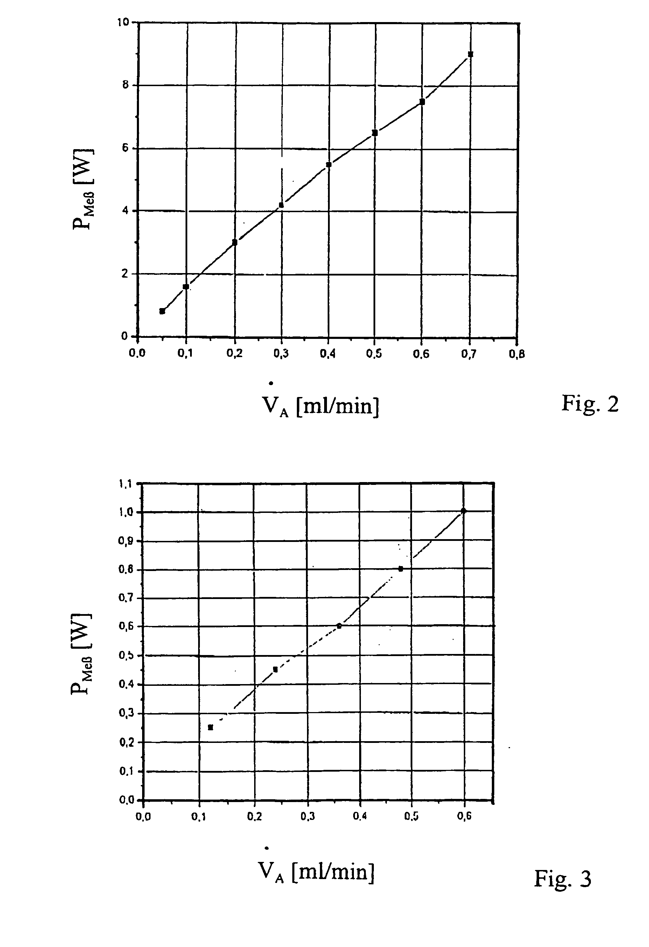

Es wurde die Reaktionswärme der stark exothermen Nitrierungsreaktion von Toluol $C_6H_5$-$CH_3$ (Komponente A) mit im wesentlichen reiner Salpetersäure $HNO_3$ (Komponente B) auf die vorbeschriebene Weise ermittelt. Wie aus Fig. 2 ersichtlich, wurde die Messung bei verschiedenen Volumenströmen der Komponente A (Toluol) von 0,05, 0,1, 0,2, 0,3, 0,4, 0,5, 0,6 und 0,7 ml/min durchgeführt. Der Volumenstrom der Komponente B (Salpetersäure) wurde bei allen Messungen derart eingestellt, daß die Salpetersäure stets in stöchiometrischem Überschuß zugesetzt wurde. Die Umsetzungstemperatur wurde auf 50°C (isotherm) eingestellt. Ferner wurde der Umsatz der Reaktion mittels eines FTIR-Spektroskopes 5 (Fig. 1) ermittelt.

Fig. 2 zeigt die anhand der in dem zweiten Seebeck-Element (9) (Fig. 1) ermittelte Wärmeleistung $P_{me\ss}$ in [Watt] in Abhängigkeit des eingestellten Volumenstroms der Komponente A (Toluol). Der Umsatz betrug jeweils etwa 100%, was dadurch nachgewiesen wurde, daß im IR-Spektrum des Ablaufes des Reaktors (1) (Fig. 1) kein Toluol-Peak mehr vorhanden war. Wie aus Fig. 2 ersichtlich, ergab sich zwischen der ermittelten Wärmeleistung $P_{Me\ss}$ in Abhängigkeit des Volumenstroms von Toluol eine lineare Abhängigkeit.

Für jede Messung wurde sodann anhand des Umsatzes die Reaktionswärme der chemischen Umsetzung von Toluol mit Salpetersäure errechnet. Dabei ergaben sich Werte zwischen 114 und 117 kJ/Mol. Die ermittelten Werte korrespondieren mit den bekannten Literaturwerten von 115 kJ/Mol bis 130 kJ/Mol.

**Beispiel 2**

Es wurde die Reaktionswärme der exothermen Nitrierungsreaktion von N,N'-Dimethylharnstoff O=C-$(NH$-$CH_3)_2$ (Komponente A) mit im wesentlichen reiner Salpetersäure $HNO_3$ (Komponente B) auf die vorbeschriebene Weise ermittelt. Wie aus Fig. 3 ersichtlich, wurde die Messung bei verschiedenen Volumenströmen der Komponente A (N,N'-Dimethylharnstoff) von 0,12, 0,24, 0,36, 0,48 und 0,60 ml/min durchgeführt. Der Volumenstrom der Komponente B (Salpetersäure) wurde bei allen Messungen derart eingestellt, daß die Salpetersäure stets in stöchiometrischem Überschuß zugesetzt wurde. Die Umsetzungstemperatur wurde auf 10°C (isotherm) eingestellt. Ferner wurde der Umsatz der Reaktion mittels eines FTIR-Spektroskopes 5 (Fig. 1) ermittelt.

Fig. 3 zeigt die anhand der in dem zweiten Seebeck-Element (9) (Fig. 1) ermittelte Wärmeleistung $P_{me\ss}$ in [Watt] in Abhängigkeit des eingestellten Volumenstroms der Komponente A (N,N'-Dimethylharnstoff). Der Umsatz betrug jeweils etwa 100%, was dadurch nachgewiesen wurde, daß im IR-Spektrum des Ablaufes des Reaktors (1) (Fig. 1) kein N,N'-Dimethylharnstoff-Peak mehr vorhanden war. Wie aus Fig. 3 ersichtlich, ergab sich zwischen der ermittelten Wärmeleistung $P_{Me\ss}$ in Abhängigkeit des Volumenstroms von N,N'-Dimethylharnstoff wiederum eine lineare Abhängigkeit.

Für jede Messung wurde sodann anhand des Umsatzes die Reaktionswärme der chemischen Umsetzung von N,N'-Dimethylharnstoff mit Salpetersäure errechnet. Dabei ergaben sich Werte im Bereich von 280 kJ/Mol. Die ermittelten, relativ hohen Werte erklären sich durch bekannte sekundäre Zersetzungsreaktionen, welche bei der Nitrierung von Harnstoff bereits bei Temperaturen im Bereich von 10°C auftreten.

Die Meßergebnisse zeigen, daß das erfindungsgemäße Verfahren und die erfindungsgemäße Vorrichtung ein schnelles und zuverlässiges Screening der bei chemischen Umsetzungen frei werdenden Reaktionswärme bei einer hohen Reproduzierbarkeit ermöglichen. Der Verbrauch der dem Mikroreaktor kontinuierlich zugesetzten Chemikalien ist minimal; die Vorrichtung gewährleistet eine hohe Prozeßsicherheit auch im Falle spontaner, explosionsartig verlaufender Umsetzungen. Eine Verfälschung des Meßergebnisses durch Startreaktionen und/oder durch zu Beginn der Reaktion schwankende Umsätze wird zuverlässig verhindert. Da die elektrisch gemessene Wärmeleitung $P_{Meß}$ über einen verhältnismäßig großen Bereich (bis etwa 30 W) linear von den Volumenströmen abhängt, sind häufige Kalibrierungen der Vorrichtung entbehrlich, wobei eine stoffabhängige Kalibrierung grundsätzlich nicht vonnöten ist. Die zur Berechnung der Wärmeleistung aus der in dem Seebeck-Element induzierten elektrischen Spannung erforderliche Proportionalitätskonstante läßt sich somit für einen breiten Arbeitsbereich der Vorrichtung ermitteln und beispielsweise seitens des Herstellers in einer Gebrauchsanweisung angeben.

**Patentansprüche**

1. Verfahren zur Messung der bei chemischen und/oder physikalischen Umsetzungen frei werdenden Wärme, wobei die miteinander zur Umsetzung zu bringenden Komponenten einem Reaktor (1) zugeführt werden und die dort frei werdende Wärme gemessen wird, **dadurch gekennzeichnet, daß** die Komponenten dem als Mikroreaktor mit einem Aufnahmevermögen von höchstens 100 μl ausgebildeten Reaktor (1) kontinuierlich zugeführt werden und daß die frei werdende Wärme bei im wesentlichen isothermer Temperaturführung des Reaktors (1) gemessen wird, indem der Reaktor (1) mit wenigstens einem Seebeck-Element (7) in wärmeleitenden Kontakt gebracht und der Reaktor (1) mittels wenigstens eines Peltier-Elementes (8) so lange temperiert wird, bis die in dem Seebeck-Element (7) induzierte elektrische Spannung im wesentlichen gleich null beträgt, und daß die bei der Umsetzung frei werdende Wärme sodann in Abhängigkeit der an das Peltier-Element (8) angelegten Spannung, welche zur Aufrechterhaltung einer in dem Seebeck-Element (7) induzierten Spannung von im wesentlichen gleich null erforderlich ist, gemessen wird.

2. Verfahren zur Messung der bei chemischen und/oder physikalischen Umsetzungen frei werdenden Wärme, wobei die miteinander zur Umsetzung zu bringenden Komponenten einem Reaktor (1) zugeführt werden und die dort frei werdende Wärme gemessen wird, **dadurch gekennzeichnet, daß** die Komponenten dem als Mikroreaktor mit einem Aufnahmevermögen von höchstens 100 μl ausgebildeten Reaktor (1) kontinuierlich zugeführt werden und daß die frei werdende Wärme bei im wesentlichen isothermer Temperaturführung des Reaktors (1) gemessen wird, indem der Reaktor (1) mit wenigstens einem ersten Seebeck-Element (7) und wenigstens einem zweiten Seebeck-Element (9) in wärmeleitenden Kontakt gebracht und der Reaktor (1) mittels wenigstens eines mit dem zweiten Seebeck-Element (9) in wärmeleitendem Kontakt stehenden Peltier-Elementes (8) so lange indirekt temperiert wird, bis die in dem ersten Seebeck-Element (7) induzierte elektrische Spannung im wesentlichen gleich null beträgt, und daß die bei der Umsetzung frei werdende Wärme sodann in Abhängigkeit der in dem zweiten Seebeck-Element (9) induzierten elektrischen Spannung unter Anlegen einer elektrischen Spannung an das Peltier-Element (8), welche zur Aufrechterhaltung einer in dem ersten Seebeck-Element (7) induzierten Spannung von im wesentlichen gleich null erforderlich ist, gemessen wird.

3. Verfahren nach Anspruch 1 oder 2, **dadurch gekennzeichnet, daß** das Seebeck-Element (7) an seiner dem Reaktor (1) abgewandten Seite mit einem im wesentlichen isothermen Wärmespeicher (11) in Kontakt gebracht wird.

4. Verfahren nach einem der Ansprüche 1 bis 3, **dadurch gekennzeichnet, daß** das Peltier-Element (8) an seiner dem Reaktor (1) abgewandten Seite mit einem im wesentlichen isothermen Wärmespeicher (14) in Kontakt gebracht wird.

5. Verfahren nach Anspruch 3 oder 4, **dadurch gekennzeichnet, daß** der Wärmespeicher (11, 14) temperiert wird.

6. Verfahren nach einem der Ansprüche 3 bis 5, **dadurch gekennzeichnet, daß** das Seebeck-Element (7) und das Peltier-Element (8) mit ein und demselben Wärmespeicher oder mit jeweils einem separaten Wärmespeicher (11, 14), welche miteinander in wärmeleitendem Kontakt stehen, in Kontakt gebracht werden.

7. Verfahren nach einem der Ansprüche 3 bis 6, **dadurch gekennzeichnet, daß** der/die Wärmespeicher (11, 14) mit einem Fluid mit einer gegenüber Luft höheren Wärmekapazität, insbesondere mit einer Flüssigkeit, betrieben wird/werden.

8. Verfahren nach einem der Ansprüche 1 bis 7, **dadurch gekennzeichnet, daß** die nicht mit einem Seebeck-Element (7, 9) oder mit einem Peltier-Element (8) in wärmeleitender Verbindung stehende Oberfläche des Reaktors (1) wärmeisoliert (10) wird.

9. Verfahren nach einem der Ansprüche 1 bis 8, **dadurch gekennzeichnet, daß** das Peltier-Element an der dem Seebeck-Element entgegengesetzten Seite des Reaktors angeordnet wird.

10. Verfahren nach einem der Ansprüche 1 bis 9, **dadurch gekennzeichnet, daß** ein konstanter Massenstrom der dem Reaktor (1) kontinuierlich zugeführten Komponenten eingestellt wird.

11. Verfahren nach einem der Ansprüche 1 bis 10, **dadurch gekennzeichnet, daß** die Zusammensetzung der aus dem Reaktor (1) kontinuierlich abgezogenen Komponenten ermittelt wird.

12. Verfahren nach Anspruch 11, **dadurch gekennzeichnet, daß** der Umsatz einer in dem Reaktor (1) ablaufenden chemischen und/oder physikalischen Reaktion in Abhängigkeit der Zusammensetzung der dem Reaktor (1) zugeführten und der aus dem Reaktor (1) abgezogenen Komponenten ermittelt wird.

13. Verfahren nach Anspruch 11 oder 12, **dadurch gekennzeichnet, daß** die Zusammensetzung der aus dem Reaktor (1) abgezogenen Komponenten spektroskopisch ermittelt wird.

14. Vorrichtung zur Messung der bei chemischen und/oder physikalischen Umsetzungen frei werdenden Wärme, mit einem Reaktor (1) mit einer Temperiereinrichtung, einem Steuerglied zur Steuerung der Temperiereinrichtung und einer Meßeinrichtung zur Messung der bei der Umsetzung frei werdenden Wärme, **dadurch gekennzeichnet, daß** der von einem Mikroreaktor mit einem Aufnahmevermögen von höchstens 100 μl gebildete Reaktor (1) wenigstens eine Zuleitung (2a, 2b) und wenigstens eine Ableitung (3) zum kontinuierlichen Zu- und Abführen der miteinander zur Umsetzung zu bringenden Komponenten aufweist, daß das Steuerglied von wenigstens einem mit dem Reaktor (1) in wärmeleitender Verbindung stehenden Seebeck-Element (7) gebildet ist, und daß die Temperiereinrichtung und die Meßeinrichtung von wenigstens einem mit dem Reaktor (1) in wärmeleitendem Kontakt stehenden Peltier-Element (8) gebildet sind, wobei das Peltier-Element (8) in Abhängigkeit der in dem Seebeck-Element (7) induzierten elektrischen Spannung derart steuerbar ist, daß eine im wesentlichen isotherme Betriebsweise des Reaktors (1) möglich ist.

15. Vorrichtung zur Messung der bei chemischen und/oder physikalischen Umsetzungen frei werdenden Wärme, mit einem Reaktor (1) mit einer Temperiereinrichtung, einem Steuerglied zur Steuerung der Temperiereinrichtung und einer Meßeinrichtung zur Messung der bei der Umsetzung frei werdenden Wärme, **dadurch gekennzeichnet, daß** der von einem Mikroreaktor mit einem Aufnahmevermögen von höchstens 100 μl gebildete Reaktor (1) wenigstens eine Zuleitung (2a, 2b) und wenigstens eine Ableitung (3) zum kontinuierlichen Zu- und Abführen der miteinander zur Umsetzung zu bringenden Komponenten aufweist, daß das Steuerglied von wenigstens einem mit dem Reaktor (1) in wärmeleitendem Kontakt stehenden ersten Seebeck-Element (7) gebildet ist, daß die Meßeinrichtung von wenigstens einem mit dem Reaktor (1) in wärmeleitendem Kontakt stehenden zweiten Seebeck-Element (9) gebildet ist, und daß die Temperiereinrichtung von wenigstens einem, über das zweite Seebeck-Element (9) mit dem Reaktor (1) mittelbar in wärmeleitendem Kontakt stehenden Peltier-Element (8) gebildet ist, wobei das Peltier-Element (8) in Abhängigkeit der in dem ersten Seebeck-Element (7) induzierten elektrischen Spannung derart steuerbar ist, daß eine im wesentlichen isotherme Betriebsweise des Reaktors (1) möglich ist.

16. Vorrichtung nach Anspruch 14 oder 15, **dadurch gekennzeichnet, daß** das Peltier-Element (8) derart in Abhängigkeit der in dem Seebeck-Element (7) induzierten elektrischen Spannung steuerbar ist, daß die in dem Seebeck-Element (7) induzierte Spannung stets im wesentlichen gleich null beträgt.

17. Vorrichtung nach einem der Ansprüche 14 bis 16, **dadurch gekennzeichnet, daß** das Seebeck-Element (7) an seiner dem Reaktor (1) abgewandten Seite mit einem im wesentlichen isothermen Wärmespeicher (11) in wärmeleitendem Kontakt steht.

18. Vorrichtung nach einem der Ansprüche 14 bis 17, **dadurch gekennzeichnet, daß** das Peltier-Element (8) an seiner dem Reaktor (1) abgewandten Seite mit einem im wesentlichen isothermen Wärmespeicher (14) in wärmeleitendem Kontakt steht.

19. Vorrichtung nach Anspruch 17 oder 18, **dadurch gekennzeichnet, daß** der Wärmespeicher (11, 14) temperierbar ist.

20. Vorrichtung nach einem der Ansprüche 17 bis 19, **dadurch gekennzeichnet, daß** das Seebeck-Element (7) und das Peltier-Element (8) mit ein und demselben Wärmespeicher oder mit jeweils einem separaten Wärmespeicher (11, 14), welche miteinander in wärmeleitendem Kontakt stehen, in wärmeleitendem Kontakt stehen.

21. Vorrichtung nach einem der Ansprüche 17 bis 20, **dadurch gekennzeichnet, daß** der/die Wärmespeicher (11, 14) von einem mit einem Fluid mit einer gegenüber Luft höheren Wärmekapazität, insbesondere einer Flüssigkeit, befüllten Reservoir (12, 15) gebildet ist/sind.

22. Vorrichtung nach einem der Ansprüche 14 bis 21, **dadurch gekennzeichnet, daß** die nicht mit einem Seebeck-Element (7, 9) oder mit einem Peltier-Element (8) in Verbindung stehende Oberfläche des Reaktors (1) mit einer Wärmeisolierung (10) versehen ist.

23. Vorrichtung nach einem der Ansprüche 14 bis 22, **dadurch gekennzeichnet, daß** die Breite des Reaktors (1) ein Mehrfaches seiner Höhe beträgt.

24. Vorrichtung nach Anspruch 23, **dadurch gekennzeichnet, daß** der Reaktor (1) im wesentlichen zylindrisch oder quaderförmig ist.

25. Vorrichtung nach Anspruch 23 oder 24, **dadurch gekennzeichnet, daß** jede Grundfläche des Reaktors (1) im wesentlichen vollständig mit dem wenigstens einen Seebeck-Element (7, 9) oder dem wenigstens einen Peltier-Element (8) in Verbindung steht.

26. Vorrichtung nach einem der Ansprüche 14 bis 25, **dadurch gekennzeichnet, daß** das Peltier-Element (8) an der dem Seebeck-Element (7) entgegengesetzten Seite des Reaktors (1) angeordnet ist.

27. Vorrichtung nach einem der Ansprüche 14 bis 26, **dadurch gekennzeichnet, daß** jede Zuleitung (2a, 2b) des Reaktors (1) mit einer steuerbaren Pumpe (4a, 4b) ausgestattet ist.

28. Vorrichtung nach einem der Ansprüche 14 bis 27, **dadurch gekennzeichnet, daß** der Reaktor (1) wenigstens zwei Zuleitungen (2a, 2b) aufweist.

29. Vorrichtung nach einem der Ansprüche 14 bis 28, **dadurch gekennzeichnet, daß** der Ableitung (3) des Reaktors (1) wenigstens ein Spektroskop (5) zur Ermittlung der Zusammensetzung der aus dem Reaktor (1) abgezogenen Komponenten nachgeordnet ist.

30. Vorrichtung nach Anspruch 29, **dadurch gekennzeichnet, daß** das Spektroskop (5) von einem Infrarot-, Ultraviolett-, Röntgenfluoreszenz- und/oder Massenspektroskop gebildet ist.

31. Computerprogrammprodukt zur Durchführung eines Verfahrens nach einem der Ansprüche 1 bis 13 mittels einer Vorrichtung nach einem der Ansprüche 14 bis 30.

32. Datenträger mit einem Computerprogrammprodukt nach Anspruch 31.

33. Datenträger nach Anspruch 32, **dadurch gekennzeichnet, daß** er von einem magnetischen, optischen oder faseroptischen Datenträger, wie einer Diskette, einer CD-ROM, einer DVD oder einer Festplatte, gebildet ist.

**Claims**

1. A method for measuring the heat liberated during chemical and/or physical reactions, the components to be reacted with one another being supplied to a reactor (1) and the heat liberated there being measured, **characterised in that** the components are continuously supplied to the reactor (1) which takes the form of a microreactor with a capacity of at most 100 μl and **in that** the heat liberated during substantially isothermal temperature control of the reactor (1) is measured by bringing the reactor (1) into thermally conductive contact with at least one Seebeck element (7) and controlling the temperature of the reactor (1) by means of at least one Peltier element (8) until the electrical voltage induced in the Seebeck element (7) is substantially equal to zero, and **in that** the heat liberated during the reaction is then measured as a function of the voltage applied to the Peltier element (8) which is required to maintain an induced voltage in the Seebeck element (7) which is substantially equal to zero.

2. A method for measuring the heat liberated during chemical and/or physical reactions, the components to be reacted with one another being supplied to a reactor (1) and the heat liberated there being measured, **characterised in that** the components are continuously supplied to the reactor (1) which takes the form of a microreactor with a capacity of at most 100 μl and **in that** the heat liberated during substantially isothermal temperature control of the reactor (1) is measured by bringing the reactor (1) into thermally conductive contact with at least one first Seebeck element (7) and at least one second Seebeck element (9) and indirectly controlling the temperature of the reactor (1) by means of at least one Peltier element (8) in thermally conductive contact with the second Seebeck element (9) until the electrical voltage induced in the first Seebeck element (7) is substantially equal to zero, and **in that** the heat liberated during the reaction is then measured as a function of the electrical voltage induced in the second Seebeck element (9) with application of an electrical voltage to the Peltier element (8) which is required to maintain an induced voltage in the first Seebeck element (7) which is substantially equal to zero.

3. A method according to claim 1 or claim 2, **characterised in that** the side of the Seebeck element (7) remote from the reactor (1) is brought into contact with a substantially isothermal heat reservoir (11).

4. A method according to one of claims 1 to 3, **characterised in that** the side of the Peltier element (8) remote from the reactor (1) is brought into contact with a substantially isothermal heat reservoir (14).

**5.** A method according to claim 3 or claim 4, **characterised in that** the temperature of the heat reservoir (11, 14) is controlled.

**6.** A method according to one of claims 3 to 5, **characterised in that** the Seebeck element (7) and the Peltier element (8) are brought into contact with one and the same heat reservoir or with in each case separate heat reservoirs (11, 14) which are in thermally conductive contact with one another.

**7.** A method according to one of claims 3 to 6, **characterised in that** heat reservoir(s) (11, 14) is/are operated with a fluid with a heat capacity higher than that of air, in particular with a liquid.

**8.** A method according to one of claims 1 to 7, **characterised in that** the surface of the reactor (1) which is thermally conductively connected to a Seebeck element (7, 9) or to a Peltier element (8) is thermally insulated (10).

**9.** A method according to one of claims 1 to 8, **characterised in that** the Peltier element is arranged on the opposite side of the reactor from the Seebeck element.

**10.** A method according to one of claims 1 to 9, **characterised in that** a constant mass flow rate of the components continuously supplied to the reactor (1) is established.

**11.** A method according to one of claims 1 to 10, **characterised in that** the composition of the components continuously drawn off from the reactor (1) is determined.

**12.** A method according to claim 11, **characterised in that** the degree of conversion of a chemical and/or physical reaction proceeding in the reactor (1) is determined as a function of the composition of the components supplied to the reactor (1) and drawn off from the reactor (1).

**13.** A method according to claim 11 or claim 12, **characterised in that** the composition of the components drawn off from the reactor (1) is determined spectroscopically.

**14.** A device for measuring the heat liberated during chemical and/or physical reactions having a reactor (1) with a temperature-control device, a control element for controlling the temperature-control device and a measuring device for measuring the heat liberated during the reaction, **characterised in that** the reactor (1) formed by a microreactor with a capacity of at most 100 µl comprises at least one feed line (2a, 2b) and at least one discharge line (3) for continuously supplying and removing the components to be reacted with one another, **in that** the control element is formed by at least one Seebeck element (7) which is thermally conductively connected to the reactor (1), and **in that** the temperature-control device and the measuring device are formed by at least one Peltier element (8) which is in thermally conductive contact with the reactor (1), wherein the Peltier element (8) is controllable as a function of the electrical voltage induced in the Seebeck element (7) such that a substantially isothermal mode of operation of the reactor (1) is possible.

**15.** A device for measuring the heat liberated during chemical and/or physical reactions having a reactor (1) with a temperature-control device, a control element for controlling the temperature-control device and a measuring device for measuring the heat liberated during the reaction, **characterised in that** the reactor (1) formed by a microreactor with a capacity of at most 100 µl comprises at least one feed line (2a, 2b) and at least one discharge line (3) for continuously supplying and removing the components to be reacted with one another, **in that** the control element is formed by at least one first Seebeck element (7) which is in thermally conductive contact with the reactor (1), **in that** the measuring device is formed by at least one second Seebeck element (9) which is in thermally conductive contact with the reactor (1), and **in that** the temperature-control device is formed by at least one Peltier element (8) which is indirectly in thermally conductive contact with the reactor (1) via the second Seebeck element (9), wherein the Peltier element (8) is controllable as a function of the electrical voltage induced in the first Seebeck element (7) such that a substantially isothermal mode of operation of the reactor (1) is possible.

**16.** A device according to claim 14 or claim 15, **characterised in that** the Peltier element (8) is controllable as a function of the electrical voltage induced in the Seebeck element (7) such that the voltage induced in the Seebeck element (7) is always substantially equal to zero.

**17.** A device according to one of claims 14 to 16, **characterised in that** the side of the Seebeck element (7) remote from the reactor (1) is in thermally conductive contact with a substantially isothermal heat reservoir (11).

**18.** A device according to one of claims 14 to 17, **characterised in that** the side of the Peltier element (8) remote from the reactor (1) is in thermally conductive contact with a substantially isothermal heat reservoir (14).

**19.** A device according to claim 17 or claim 18, **characterised in that** the heat reservoir (11, 14) is temperature-controllable.

**20.** A device according to one of claims 17 to 19, **characterised in that** the Seebeck element (7) and the Peltier element (8) are in thermally conductive contact with one and the same heat reservoir or with in each case separate heat reservoirs (11, 14), which are in thermally conductive contact with one another.

**21.** A device according to one of claims 17 to 20, **characterised in that** the heat reservoir(s) (11, 14) is/are formed by a reservoir (12, 15) filled with a fluid with a heat capacity higher than that of air, in particular with a liquid.

**22.** A device according to one of claims 14 to 21, **characterised in that** the surface of the reactor (1) which is not connected to a Seebeck element (7, 9) or to a Peltier element (8) is provided with thermal insulation (10).

**23.** A device according to one of claims 14 to 22, **characterised in that** the width of the reactor (1) is a multiple of the height thereof.

**24.** A device according to claim 23, **characterised in that** the reactor (1) is substantially cylindrical or cuboidal.

**25.** A device according to claim 23 or claim 24, **characterised in that** each base surface of the reactor (1) is substantially completely connected to the at least one Seebeck element (7, 9) or the at least one Peltier element (8).

**26.** A device according to one of claims 14 to 25, **characterised in that** the Peltier element (8) is arranged on the opposite side of the reactor (1) from the Seebeck element (7).

**27.** A device according to one of claims 14 to 26, **characterised in that** each feed line (2a, 2b) of the reactor (1) is equipped with a controllable pump (4a, 4b).

**28.** A device according to one of claims 14 to 27, **characterised in that** the reactor (1) comprises at least two feed lines (2a, 2b).

**29.** A device according to one of claims 14 to 28, **characterised in that** at least one spectroscope (5) for determining the composition of the components drawn off from the reactor (1) is arranged downstream of the discharge line (3) of the reactor (1).

**30.** A device according to claim 29, **characterised in that** the spectroscope (5) is formed by an infrared, ultraviolet, X-ray fluorescence and/or mass spectroscope.

**31.** A computer software product for carrying out a method according to one of claims 1 to 13 by means of a device according to one of claims 14 to 30.

**32.** A data storage medium with a computer software product according to claim 31.

**33.** A data storage medium according to claim 32, **characterised in that** it is formed by a magnetic, optical or fibre-optical data storage medium, such as a diskette, a CD-ROM, a DVD or a hard disk.

## Revendications

**1.** Procédé de mesure de la chaleur libérée par des réactions chimiques ou physiques, les composants mis en réaction les uns avec les autres étant amenés à un réacteur (1) et la chaleur y étant libérée étant mesurée, **caractérisé en ce que** les composants sont amenés en continu au réacteur (1) réalisé sous la forme d'un microréacteur présentant une capacité d'absorption de tout au plus 100 $\mu$l et que la chaleur libérée est mesurée pour une amenée de température pour l'essentiel isotherme du réacteur (1), le réacteur (1) étant mis en contact thermoconducteur avec moins un élément de Seebeck (7) et le réacteur (1) étant tempéré à l'aide d'au moins un élément de Peltier (8) jusqu'à ce que la tension électrique induite dans l'élément de Seebeck (7) soit pour l'essentiel égale à zéro, et que la chaleur libérée lors de la réaction est alors mesurée en fonction de la tension appliquée au niveau de l'élément de Peltier (8) nécessaire au maintien d'une tension induite dans l'élément de Seebeck (7) pour l'essentiel égale à zéro.

**2.** Procédé de mesure de la chaleur libérée par des réactions chimiques ou physiques, les composants mis en réaction les uns avec les autres étant amenés à un réacteur (1) et la chaleur y étant libérée étant mesurée, **caractérisé en ce que** les composants sont amenés en continu au réacteur (1) réalisé sous la forme d'un microréacteur présentant une capacité d'absorption de tout au plus 100 $\mu$l et que la chaleur libérée est mesurée pour une amenée de température pour l'essentiel isotherme du réacteur (1), le réacteur (1) étant mis en contact thermoconducteur avec au moins un premier élément de Seebeck (7) et au moins un deuxième élément de Seebeck (9) et le réacteur (1) étant tempéré indirectement à l'aide d'au moins un élément de Peltier (8) placé en contact thermoconducteur avec le deuxième élément de Seebeck (9) jusqu'à ce que la tension électrique induite dans le premier élément de Seebeck (7) soit pour l'essentiel égale à zéro et que la chaleur libérée lors de la réaction est alors mesurée en fonction de la tension électrique induite dans le deuxième élément de Seebeck (9) par application au niveau de l'élément de Peltier (8) d'une tension électrique nécessaire au maintien d'une tension induite dans le premier élément de Seebeck (7) pour l'essentiel égale à zéro.

**3.** Procédé selon la revendication 1 ou 2, **caractérisé en ce que** l'élément de Seebeck (7) est amené en contact avec un accumulateur de chaleur (11) pour l'essentiel isotherme au niveau de son côté opposé au réacteur (1).

**4.** Procédé selon l'une quelconque des revendications 1 à 3, **caractérisé en ce que** l'élément de Peltier (8) est amené en contact avec un accumulateur de chaleur (14) pour l'essentiel isotherme au niveau de son côté opposé au réacteur (1).

**5.** Procédé selon la revendication 3 ou 4, **caractérisé en ce que** l'accumulateur de chaleur (11, 14) est tempéré.

**6.** Procédé selon l'une quelconque des revendications 3 à 5, **caractérisé en ce que** l'élément de Seebeck (7) et l'élément de Peltier (8) sont mis en contact avec un seul et même accumulateur de chaleur ou avec respectivement un accumulateur de chaleur séparé (11, 14) placé en contact thermoconducteur avec l'autre accumulateur de chaleur associé.

**7.** Procédé selon l'une quelconque des revendications 3 à 6, **caractérisé en ce que** le ou les accumulateurs de chaleur (11, 14) sont entraînés à l'aide d'un fluide présentant une capacité thermique supérieure à celle de l'air, notamment à l'aide d'un liquide.

**8.** Procédé selon l'une quelconque des revendications 1 à 7, **caractérisé en ce que** surface du réacteur (1) ne se trouvant pas en liaison thermoconductrice avec un élément de Seebeck (7, 9) ou avec un élément de Peltier (8) est isolée thermiquement (10).

**9.** Procédé selon l'une quelconque des revendications 1 à 8, **caractérisé en ce que** l'élément de Peltier est disposé au niveau du côté du réacteur opposé à l'élément de Seebeck.

**10.** Procédé selon l'une quelconque des revendications 1 à 9, **caractérisé par** la présence d'un réglage d'un débit massique constant des composants amenés en continu au réacteur (1).

**11.** Procédé selon l'une quelconque des revendications 1 à 10, **caractérisé en ce que** la composition des composants retirés en continu du réacteur (1) est calculée.

**12.** Procédé selon la revendication 11, **caractérisé en ce que** l'ampleur d'une réaction chimique et/ou physique se produisant dans le réacteur (1) est calculée en fonction de la composition des composants amenés au réacteur (1) et des composants retirés du réacteur (1).

**13.** Procédé selon la revendication 11 ou 12, **caractérisé en ce que** la composition des composants retirés du réacteur (1) est calculée par spectroscopie.

**14.** Dispositif de mesure de la chaleur libérée par des réactions chimiques ou physiques, avec un réacteur (1) doté d'un dispositif de chambrage, d'un organe de commande servant à commander le dispositif de chambrage et d'un dispositif de mesure servant à mesurer la chaleur libérée par la réaction, **caractérisé en ce que** le réacteur (1) formé par un microréacteur présentant une capacité d'absorption de tout au plus 100 μl comporte au moins une conduite d'amenée (2a, 2b) et au moins une conduite d'évacuation (3) permettant d'amener et d'évacuer en continu les composants mis en réaction les uns avec les autres, que l'organe de commande est formé par au moins un élément de Seebeck (7) placé en liaison thermoconductrice avec le réacteur (1) et que le dispositif de chambrage et le dispositif de mesure sont formés par au moins un élément de Peltier (8) placé en contact thermoconducteur avec le réacteur (1), l'élément de Peltier (8) pouvant être commandé en fonction de la tension électrique induite dans l'élément de Seebeck (7) de façon à permettre un mode de fonctionnement pour l'essentiel isotherme du réacteur (1).

**15.** Dispositif de mesure de la chaleur libérée par des réactions chimiques ou physiques, avec un réacteur (1) doté d'un dispositif de chambrage, d'un organe de commande servant à commander le dispositif de chambrage et d'un dispositif de mesure servant à mesurer la chaleur libérée par la réaction, **caractérisé en ce que** le réacteur (1) formé par un microréacteur présentant une capacité d'absorption de tout au plus 100 μl comporte au moins une conduite d'amenée (2a, 2b) et au moins une conduite d'évacuation (3) permettant d'amener et d'évacuer en continu les composants mis en réaction les uns avec les autres, que l'organe de commande est formé par au moins un premier élément de Seebeck (7) placé en contact thermoconducteur avec le réacteur (1), que le dispositif de mesure est formé par au moins un deuxième élément de Seebeck (9) placé en contact thermoconducteur avec le réacteur (1) et que le dispositif de chambrage est formé par au moins un élément de Peltier (8) placé indirectement en contact thermoconducteur avec le réacteur (1) par le biais du deuxième élément de Seebeck (9), l'élément de Peltier (8) pouvant être commandé en fonction de la tension électrique induite dans le premier élément de Seebeck (7) de façon à permettre un mode de fonctionnement pour l'essentiel isotherme du réacteur (1).

16. Dispositif selon la revendication 14 ou 15, **caractérisé en ce que** l'élément de Peltier (8) peut être commandé en fonction de la tension électrique induite dans l'élément de Seebeck (7) de façon à permettre que la tension induite dans l'élément de Seebeck (7) soit en permanence pour l'essentiel égale à zéro.

17. Dispositif selon l'une quelconque des revendications 14 à 16, **caractérisé en ce que** l'élément de Seebeck (7) est placé en contact thermoconducteur avec un accumulateur de chaleur (11) pour l'essentiel isotherme au niveau de son côté opposé au réacteur (1).

18. Dispositif selon l'une quelconque des revendications 14 à 17, **caractérisé en ce que** l'élément de Peltier (8) est placé en contact thermoconducteur avec un accumulateur de chaleur (14) pour l'essentiel isotherme au niveau de son côté opposé au réacteur (1).

19. Dispositif selon la revendication 17 ou 18, **caractérisé en ce que** l'accumulateur de chaleur (11, 14) peut être tempéré.

20. Dispositif selon l'une quelconque des revendications 17 à 19, **caractérisé en ce que** l'élément de Seebeck (7) et l'élément de Peltier (8) sont placés en contact thermoconducteur avec un seul et même accumulateur de chaleur ou avec respectivement un accumulateur de chaleur séparé (11, 14) placé en contact thermoconducteur avec l'autre accumulateur de chaleur associé.

21. Dispositif selon l'une quelconque des revendications 17 à 20, **caractérisé en ce que** le ou les accumulateurs de chaleur (11, 14) sont formés par un réservoir (12, 15) rempli de fluide présentant une capacité thermique supérieure à celle de l'air, notamment un liquide.

22. Dispositif selon l'une quelconque des revendications 14 à 21, **caractérisé en ce que** la surface du réacteur (1) ne se trouvant pas en liaison thermoconductrice avec un élément de Seebeck (7, 9) ou avec un élément de Peltier (8) est pourvue d'un isolant thermique (10).

23. Dispositif selon l'une quelconque des revendications 14 à 22, **caractérisé en ce que** la largeur du réacteur (1) est un multiple de sa hauteur.

24. Dispositif selon la revendication 23, **caractérisé en ce que** le réacteur (1) prend pour l'essentiel une forme de cylindre ou de parallélépipède rectangle.

25. Dispositif selon la revendication 23 ou 24, **caractérisé en ce que** chaque surface de base du réacteur (1) est pour l'essentiel entièrement reliée à l'au moins un élément de Seebeck (7, 9) ou à l'au moins un élément de Peltier (8).

26. Dispositif selon l'une quelconque des revendications 14 à 25, **caractérisé en ce que** l'élément de Peltier (8) est disposé au niveau du côté du réacteur (1) opposé à l'élément de Seebeck (7).

27. Dispositif selon l'une quelconque des revendications 14 à 26, **caractérisé en ce que** chaque conduite d'amenée (2a, 2b) du réacteur (1) est équipée d'une pompe (4a, 4b) commandable.

28. Dispositif selon l'une quelconque des revendications 14 à 27, **caractérisé en ce que** le réacteur (1) comporte au moins deux conduites d'amenée (2a, 2b).

29. Dispositif selon l'une quelconque des revendications 14 à 28, **caractérisé en ce qu'**au moins un spectroscope (5) est placé en aval de la conduite d'évacuation (3) du réacteur (1) en vue de calculer la composition des composants sortis du réacteur (1).

30. Dispositif selon la revendication 29, **caractérisé en ce que** le spectroscope (5) est formé par un spectroscope d'infrarouges, d'ultraviolets, de rayons X fluorescents et/ou de masse.

31. Produit de programme informatique servant à mettre en oeuvre un procédé selon l'une quelconque des revendications 1 à 13 à l'aide d'un dispositif selon l'une quelconque des revendications 14 à 30.

32. Support de données doté d'un produit de programme informatique selon la revendication 31.

33. Support de données selon la revendication 32, **caractérisé en ce qu'**il est formé par un support de données magnétique, optique ou en fibre optique, tel qu'une disquette, un CD-ROM, un DVD ou un disque dur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19703892 A1

**In der Beschreibung aufgeführte Nicht-Patentliteratur**

- **VELAZQUEZ-CAMPOY et al.** *Review of Scientific Instruments,* April 2000, vol. 71 (4), 1824-1831